# EUROPÄISCHE PATENTSCHRIFT

(11) **EP 0 538 434 B1**
(45) Veröffentlichungstag und Bekanntmachung des Hinweises auf die Patenterteilung: **25.01.1995**
(21) Anmeldenummer: 92909828.3
(22) Anmeldetag: 08.05.1992
(51) Int. Cl.: B23H 9/00, B23H 7/02

(54) **VERFAHREN UND MASCHINE ZUM ELEKTROEROSIVEN BEARBEITEN VON SCHNEIDPLATTEN**
PROCESS AND MACHINE FOR ELECTRICAL DISCHARGE MACHINING OF CUTTING TIPS
PROCEDE ET MACHINE D'USINAGE ELECTRO-EROSIF DE PLAQUETTES COUPANTES

(30) Priorität: 08.05.1991 DE 4115107
(43) Veröffentlichungstag der Anmeldung: 28.04.1993
(73) Patentinhaber: VOLLMER WERKE MASCHINENFABRIK GMBH, D-88400 Biberach (DE)
(72) Erfinder: LENARD, Peter, D-7950 Biberach/Riss (DE); BAILER, Norbert, D-7957 Schemmerhofen 6 (DE)
(74) Vertreter: Goetz, Rupert, Dipl.-Ing.
(86) Internationale Anmeldenummer: EP9201008
(87) Internationale Veröffentlichungsnummer: WO9219410

(56) Entgegenhaltungen:
- US-A- 4 841 126
- US-A- 4 983 078

## Beschreibung

Die Erfindung betrifft ein Verfahren zum elektroerosiven Bearbeiten von Schneidplatten mittels eines Elektrodendrahts, wobei jeweils eine Schneidplatte programmgesteuert um eine Werkstückachse gedreht sowie in bezug zum Elektrodendraht längs mindestens einer von drei Achsen eines rechtwinkligen Koordinatensystems, darunter eine zur Werkstückachse parallele Achse, geradlinig verstellt wird.

Ferner betrifft die Erfindung eine Maschine zum elektroerosiven Bearbeiten von Schneidplatten mit
- einer Aufspannvorrichtung für mindestens eine Schneidplatte,
- einem programmgesteuerten Motor zum Drehen der Schneidplatte um eine Werkstückachse,
- einer Drahthalterung, über die ein Elektrodendraht geführt ist, und
- einer Schlittenanordnung mit programmgesteuerten Antrieben für geradlinige Relativbewegungen zwischen Schneidplatte und Elektrodendraht längs der drei Achsen eines rechtwinkligen Koordinatensystems.

Schneidplatten, mit deren Bearbeitung - zum Zwecke des Herstellens oder Nachschärfens - die Erfindung zu tun hat, werden beispielsweise an Fräser oder Drehstahlhalter angelötet oder angeklemmt; sie können als Wendeplatten ausgestattet sein und somit mehrere Schneidkanten aufweisen, die sich nacheinander in eine Arbeitsstellung bringen lassen. Vor allem Fräser zum Bearbeiten von Platten, Brettern oder Leisten aus Holz oder Kunststoff sind häufig mit kompliziert profilierten Schneidplatten bestückt, deren Bearbeitung nach bekannten Verfahren und mit bekannten Maschinen einen erheblichen Steuerungs- und Programmieraufwand erfordert, damit an allen an die Schneidkanten solcher Schneidplatten angrenzenden Freiflächen und Spanflächen die günstigsten Frei- bzw. Spanwinkel eingehalten werden. Wegen des bisher erforderlichen hohen Programmieraufwandes mußten bei der Bemessung dieser Winkel häufig Kompromisse eingegangen werden, die sich ungünstig auf die Schneidleistung und Standzeit der Schneidplatten ausgewirkt haben.

Der Erfindung liegt deshalb die Aufgabe zugrunde, ein Verfahren und eine Maschine zum elektroerosiven Bearbeiten von Schneidplatten derart weiterzubilden, daß auch bei komplizierten Schneidplattenkonturen die günstigsten Winkel, insbes. Freiwinkel, mit geringem Programmier- und Steuerungsaufwand genau eingehalten werden können.

Die Aufgabe ist, soweit sie ein Verfahren betrifft, erfindungsgemäß ausgehend von einem Verfahren der eingangs beschriebenen Gattung dadurch gelöst, daß die Schneidplatte während der Bearbeitung einer an eine Schneidkante angrenzenden Freifläche derart um die Werkstückachse gedreht wird, daß der Punkt, an dem der Elektrodendraht die Schneidkante berührt, jeweils auf einer Werkzeugachse liegt, die sich im rechten Winkel zum Elektrodendraht sowie zu zwei Achsen des Koordinatensystems erstreckt.

Dabei ist es besonders vorteilhaft, wenn der Elektrodendraht während der Bearbeitung von Abschnitten der Freifläche, die an zur Werkstückachse nicht parallele Abschnitte der Schneidkante angrenzen, um die Werkzeugachse gedreht wird.

Durch die Drehung um die Werkzeugachse ist es möglich, den Freiwinkel einer Schneidplatte, gemessen in einer zur Werkstückachse normalen Ebene, auch dann konstant zu halten, wenn die Schneidkante in unterschiedlichen radialen Abständen von der Werkstückachse verläuft. Durch die Anordnung der Werkzeugachse im rechten Winkel zur Werkstückachse und dadurch, daß die Werkstückachse sich durch die Schneidkante erstreckt, ergibt sich eine verzerrungsfreie Bearbeitung auch seitlicher Freiflächen, deren Freiwinkel in einer zur Werkstückachse parallelen Ebene gemessen wird.

Soweit die Erfindungsaufgabe eine Maschine betrifft, ist sie erfindungsgemäß ausgehend von einer Maschine der eingangs genannten Art dadurch gelöst, daß die Drahthalterung programmgesteuert um eine Werkzeugachse drehbar ist, die sich im rechten Winkel zum Elektrodendraht sowie zu zwei Achsen des Koordinatensystems erstreckt.

Die erfindungsgemäße Maschine ist zweckmäßigerweise dadurch weitergebildet, daß die Drahthalterung auf einem um die Werkzeugachse drehbaren Drehkörper angeordnet ist, der auch einen Meßtaster zum Messen von Konturen und Flächen der Schneidplatte trägt.

Ein Ausführungsbeispiel der Erfindung wird im folgenden anhand schematischer Zeichnungen mit weiteren Einzelheiten beschrieben. Es zeigen:
- Fig. 1: eine Schrägansicht einer erfindungsgemäßen Maschine zum elektroerosiven Bearbeiten von Schneidplatten;
- Fig. 2: einen vergrößerten Ausschnitt aus Fig. 1 in einer Bearbeitungsstellung der Maschine;
- Fig. 3: den gleichen Ausschnitt in einer Meßstellung der Maschine;
- Fig. 4: einen Ausschnitt eines Werkstücks bei der Bearbeitung;
- Fig. 5: die Ansicht in Richtung des Pfeils V in Fig. 4;
- Fig. 6: die Ansicht in Richtung des Pfeils VI in Fig. 4; und
- Fig. 7: einen vergrößerten Ausschnitt aus Fig. 4.

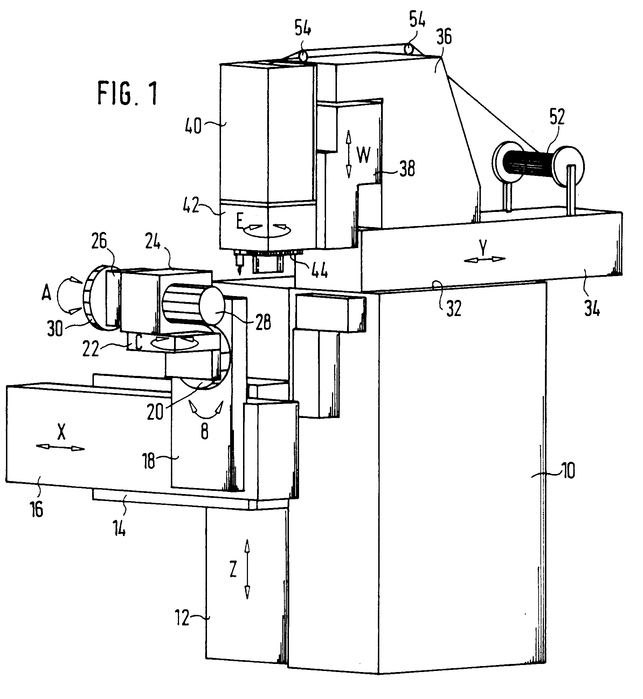

Die in Fig. 1 bis 3 dargestellte Maschine hat ein Maschinengestell 10 mit einer senkrechten Führung 12, an der ein Schlitten 14 in Richtung einer Z-Achse verschiebbar geführt ist. Am Schlitten 14 ist eine waagerechte Führung 16 ausgebildet, an der ein Schlitten 18 längs einer X-Achse verschiebbar geführt ist. Am Schlitten 18 ist ein Drehlager 20 ausgebildet, in dem eine Konsole 22 um eine zu den X- und Z-Achsen normale B-Achse dreheinstellbar gelagert ist. Auf der Konsole 22 ist ein Gehäuse 24 um eine zur Z-Achse parallele C-Achse dreheinstellbar gelagert. Am Gehäuse 24 ist eine Aufspannvorrichtung 26 um eine die C-Achse rechtwinklig schneidende A-Achse drehbar gelagert und mittels eines Motors 28 antreibbar. Die Aufspannvorrichtung 26 trägt ein Werkstück 30, das im dargestellten Beispiel ein Fräser ist.

Am Maschinengestell 10 ist ferner eine waagerechte Führung 32 ausgebildet, an der ein Schlitten 34 in Richtung einer Y-Achse, im rechten Winkel zu den X- und Z-Achsen, verschiebbar geführt ist. Der Schlitten 34 trägt einen Ständer 36, an dem eine senkrechte Führung 38 für einen Schlitten 40 ausgebildet ist, der längs einer senkrechten W-Achse verschiebbar ist. Der Schlitten 40 trägt ein Gehäuse 42, an dem ein Drehkörper 44 um eine senkrechte Werkzeugachse E dreheinstellbar gelagert ist.

Der Drehkörper 44 trägt eine nach unten offene, gabelförmige Drahthalterung 46 mit zwei senkrechten Schenkeln 48, zwischen denen ein Elektrodendraht 50 waagerecht ausgespannt gehalten ist. Der Elektrodendraht 50 wird schrittweise oder kontinuierlich von einer Spule 52 abgezogen, läuft über Umlenkrollen 54 und ist an einen Pol einer Stromquelle angeschlossen. Das Werkstück 30 ist an den anderen Pol angeschlossen.

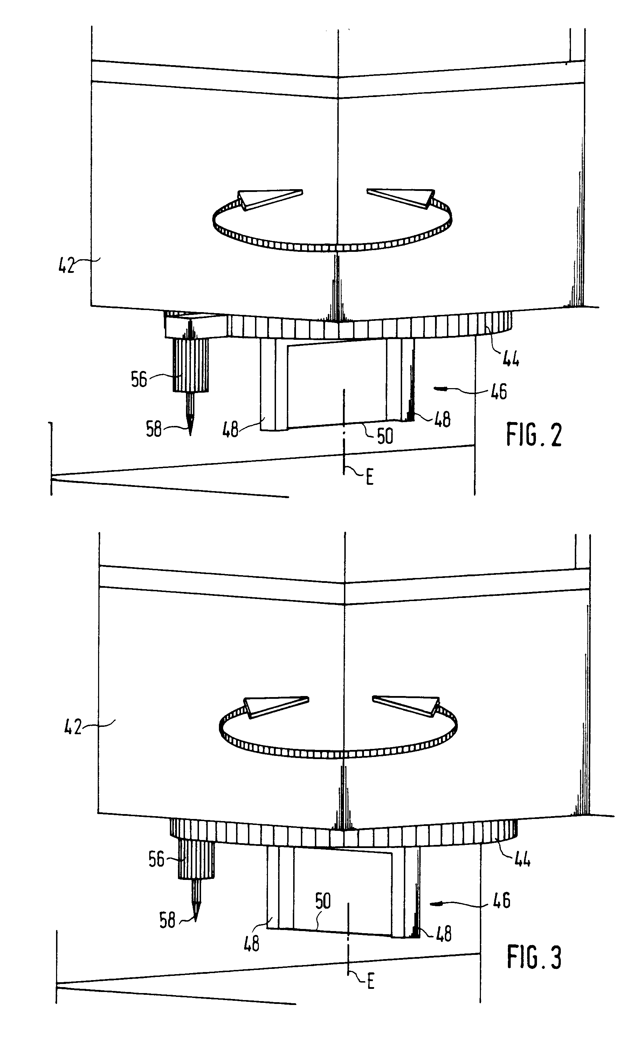

Am Drehkörper 44 ist, gegen die Drahthalterung 46 seitlich versetzt, ein Meßtaster 56 befestigt, mit dessen Spitze 58 sich eine Schneidplatte 60 abtasten läßt. Zum Messen nimmt der Drehkörper 44 die in Fig. 3 abgebildete Stellung ein; zum elektroerosiven Bearbeiten mittels des Elektrodendrahts 50 ist die Stellung gemäß Fig. 2 vorgesehen, die gegen die Meßstellung um 90° verdreht ist.

Sämtliche Antriebe für die genannten Schlitten und sämtliche Drehantriebe sind von einem Rechner programmgesteuert, der auch Meßergebnisse des Meßtasters 56 verarbeitet.

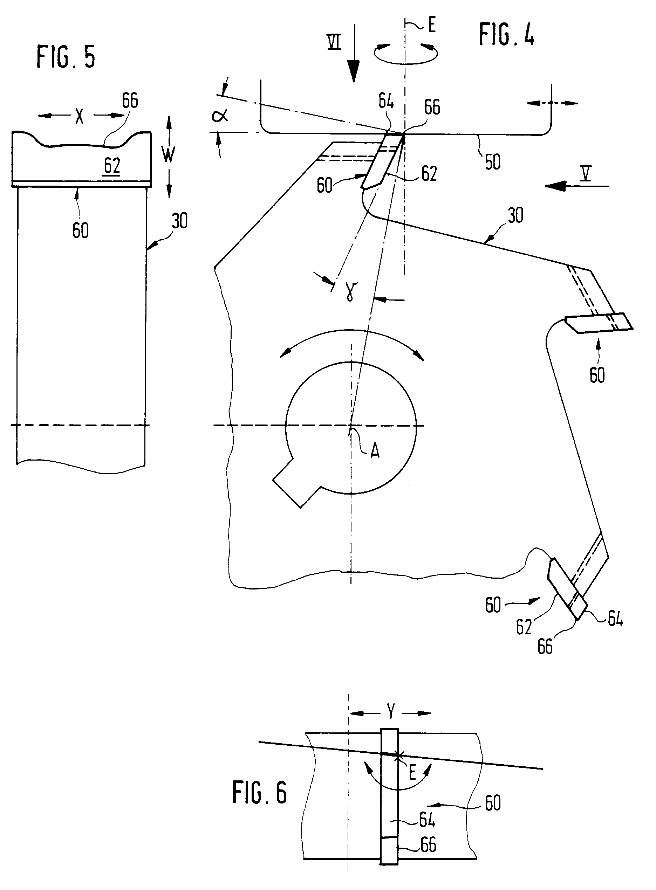

Das in Fig. 4 bis 7 dargestellte Werkstück 30 ist mit mehreren Schneidplatten 60 bestückt; jede von diesen hat eine Spanfläche 62 und eine Freifläche 64, die eine im dargestellten Beispiel kronenartig profilierte Schneidkante 66 bilden. Die Freifläche 64 hat einen in all ihren Bereichen optimierten und zumindest im von der Werkstückachse A abgewandten Bereich jeder Schneidplatte 60 konstanten Freiwinkel α; die Spanfläche 62 hat einen konstanten Spanwinkel γ.

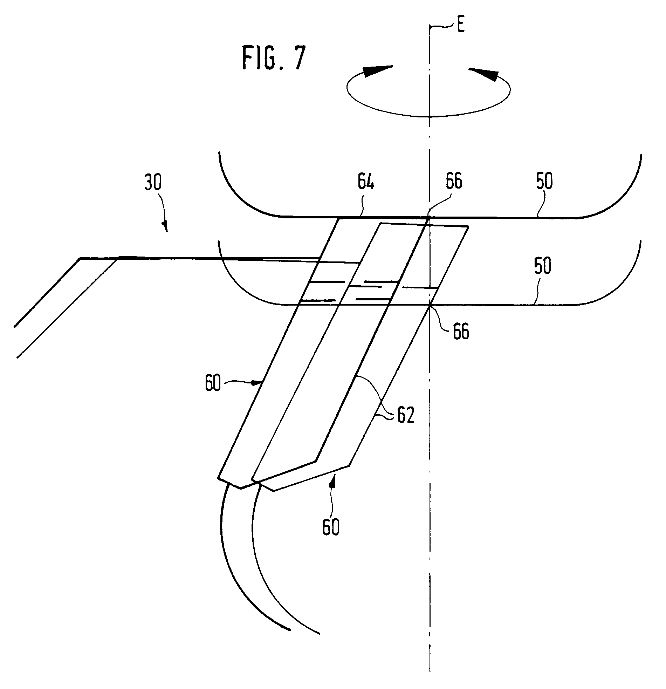

In Fig. 7 ist eine Schneidplatte 60 mit dicken Linien in einer Stellung abgebildet, in der ein von der Werkstückachse A weit entfernter Bereich ihrer Freifläche 64 vom Elektrodendraht 50 bearbeitet wird. Mit dünnen Linien ist dieselbe Schneidplatte 60 in einer Stellung abgebildet, in der ein der Werkstückachse A erheblich näherliegender Bereich ihrer Freifläche 64 bearbeitet wird. Die beiden abgebildeten Stellungen gehen durch Drehen des Werkstücks 30 um die Werkstückachse A auseinander hervor, ohne daß die Werkstückachse A selbst ihre Stellung zu verändern braucht. In beiden Fällen ist dafür gesorgt, daß der Punkt der Schneidkante 66, an dem der Elektrodendraht 50 gerade arbeitet, auf der Werkzeugachse E liegt.

## Patentansprüche

1. Verfahren zum elektroerosiven Bearbeiten von Schneidplatten (60) mittels eines Elektrodendrahts (50), wobei jeweils eine Schneidplatte (60) programmgesteuert um eine Werkstückachse (A) gedreht sowie in bezug zum Elektrodendraht (50) längs mindestens einer von drei Achsen (X, Y, Z) eines rechtwinkligen Koordinatensystems, darunter eine zur Werkstückachse (A) parallele Achse (X), geradlinig verstellt wird,
dadurch **gekennzeichnet,** daß die Schneidplatte (60) während der Bearbeitung einer an eine Schneidkante (66) angrenzenden Freifläche (64) derart um die Werkstückachse (A) gedreht wird, daß der Punkt, an dem der Elektrodendraht (50) die Schneidkante (66) berührt, jeweils auf einer Werkzeugachse (E) liegt, die sich im rechten Winkel zum Elektrodendraht (50) sowie zu zwei Achsen (X, Y) des Koordinatensystems erstreckt.

2. Verfahren nach Anspruch 1,
dadurch **gekennzeichnet,** daß der Elektrodendraht (50) während der Bearbeitung von Abschnitten der Freifläche (64), die an zur Werkstückachse (A) nicht parallele Abschnitte der Schneidkante (66) angrenzen, um die Werkzeugachse (E) gedreht wird.

3. Maschine zum elektroerosiven Bearbeiten von Schneidplatten (60) mit
- einer Aufspannvorrichtung (26) für mindestens eine Schneidplatte (60),
- einem programmgesteuerten Motor (28) zum Drehen der Schneidplatte (60) um eine Werkstückachse (A),
- einer Drahthalterung (46), über die ein Elektrodendraht (50) geführt ist, und
- einer Schlittenanordnung (14, 18, 34) mit programmgesteuerten Antrieben für geradlinige Relativbewegungen zwischen Schneidplatte (60) und Elektrodendraht (50) längs der drei Achsen (X, Y, Z) eines rechtwinkligen Koordinatensystems,
dadurch **gekennzeichnet,** daß die Drahthalterung (46) programmgesteuert um eine Werkzeugachse (E) drehbar ist, die sich im rechten Winkel zum Elektrodendraht (50) sowie zu zwei Achsen (X, Y) des Koordinatensystems erstreckt.

4. Maschine nach Anspruch 3,
dadurch **gekennzeichnet,** daß die Drahthalterung (46) auf einem um die Werkzeugachse (E) drehbaren Drehkörper (44) angeordnet ist, der auch einen Meßtaster (56) zum Messen von Konturen und Flächen der Schneidplatte (60) trägt.

## Claims

1. An electric discharge machining process for finishing cutter plates (60) by means of an electrode wire (50), wherein a respective cutter plate (60) is rotated under program control about a workpiece axis (A) and is adjusted rectilinearly with respect to the electrode wire (50) along at least one of three axes (X, Y, Z) of a rectangular coordinate system, among them one axis (X) which is parallel to the workpiece axis (A), **characterized** in that the cutter plate (60) is rotated in such manner about the workpiece axis (A) during the machining of a flank (64) adjacent a cutting edge (66) that the point at which the electrode wire (50) touches the cutting edge (66) always lies on a tool axis (E) which extends at right angles to the electrode wire (50) and to two axes (X, Y) of the coordinate system.

2. The process as claimed in claim 1, characterized in that the electrode wire (50) is rotated about the tool axis (E) during the machining of portions of the flank (64) which are located adjacent portions of the cutting edge (66) not in parallel with the workpiece axis (A).

3. A machine for electric discharge machining of cutter plates (60), comprising
- a mount (26) for at least one cutter plate (60),
- a program controlled motor (28) for rotating the cutter plate (26) about a workpiece axis (A),
- a wire fixture (46) over which an electrode wire (50) is guided, and
- a carriage arrangement (14, 18, 34) with program controlled drives for rectilinear relative movements between the cutter plate (60) and the electrode wire (50) along the three axes (X, Y, Z) of a rectangular coordinate system, **characterized** in that the wire fixture (46) is rotatable under program control about a tool axis (E) which extends at right angles to the electrode wire (50) and to two axes (X, Y) of the coordinate system.

4. The machine as claimed in claim 3, characterized in that the wire fixture (46) is disposed on a rotary member (44) which is rotatable about the tool axis (E) and further carries a sensor (56) for measuring contours and surfaces of the cutter plate (60).

## Revendications

1. Procédé pour l'usinage par électroérosion de plaquettes de coupe (60) au moyen d'un fil métallique d'électrode (50), chaque fois, une plaquette de coupe (60) étant tournée sous la commande d'un programme autour d'un axe de pièce à travailler (A), ainsi qu'étant déplacé rectilignement par rapport au fil métallique d'électrode (50) le long d'au moins un des trois axes (X, Y, Z) d'un système de coordonnées rectangulaires, parmi eux un axe (X) parallèle à l'axe de pièce à travailler (A), caractérisé en ce que la plaquette de coupe (60), durant l'usinage d'une face de dépouille (64) contiguë à une arête de coupe (66), est tournée de telle sorte autour de l'axe de pièce à travailler (A), que le point, auquel le fil métallique d'électrode (50) vient en contact avec l'arête de coupe (66), chaque fois, se trouve sur un axe d'outil (E), qui s'étend à angle droit par rapport au fil métallique d'électrode (50) ainsi qu'à deux axes (X, Y) du système de coordonnées.

2. Procédé selon la revendication 1, caractérisé en ce que le fil métallique d'électrode (50), durant l'usinage de sections de la face de dépouille (64), qui sont contiguës à des sections de l'arête de coupe (66) non parallèles à l'axe de pièce à travailler (A), est tourné autour de l'axe d'outil (E).

3. Machine pour l'usinage par électroérosion de plaquettes de coupe (60) comprenant
- un dispositif de bridage (26), pour au moins une plaquette de coupe (60),
- un moteur (28) commandé par programme, pour la rotation de la plaquette de coupe (60) autour d'un axe de pièce à travailler (A),
- un dispositif de maintien de fil métallique (46), par l'intermédiaire duquel un fil métallique d'électrode (50) est guidé, et
- un agencement de coulisseaux (14, 18, 34) avec des entraînements commandés par programme, pour des mouvements relatifs rectilignes entre plaquette de coupe (60) et fil métallique d'électrode (50), le long des trois axes (X, Y, Z) d'un système de coordonnées rectangulaires, caractérisée en ce que le dispositif de maintien de fil métallique (46) est susceptible d'être tourné, sous commande d'un programme, autour d'un axe d'outil (E), qui s'étend à angle droit par rapport au fil métallique d'électrode (50) ainsi qu'aux deux axes (X, Y) du système de coordonnées.

4. Machine selon la revendication 3, caractérisée en ce que le dispositif de maintien de fil métallique (46) est agencé sur un corps rotatif (44), susceptible d'être tourné autour de l'axe d'outil (E), qui porte aussi un palpeur de mesure (56) pour la mesure de contours et de faces de la plaquette de coupe (60).
